# EUROPEAN PATENT APPLICATION

(11) **EP 4 830 967 A1**
(43) Date of publication of application: **28.10.2026**
(21) Application number: 26170823.4
(22) Date of filing: 07.04.2026
(51) Int. Cl.: B60K 35/10, B60K 35/53

(54) **VEHICLE CONTROL USING A CONTROL INTERFACE**

(30) Priority: 25.04.2025 GB 202506257
(71) Applicant: Agco Corporation, Duluth, Georgia 30096 (US)
(72) Inventor: Kuphal, John, Jackson, 56143 (US)
(74) Representative: AGCO Intellectual Property Department

(57) **Abstract**

This disclosure provides a control station for controlling a vehicle, comprising a seat and a control interface. The control interface is mounted by a mounting system such that it can be positioned for left-handed or right-handed operation. The control interface is mounted at the end of a support arm. In one configuration the support arm is upright with the control interface at the top. In the other configuration, the support arm is lifted and rotated so that it lies over the lap of the user, and the control interface is then positioned towards the other side of the user.

## Description

### FIELD

Embodiments of the present disclosure relate generally to vehicles that are controlled by a control interface, for example including one or more joysticks.

### BACKGROUND

Various vehicles, particularly in agriculture and construction, having steering or other functions controlled by a control interface, for example including a joystick. Examples are tractors, combine harvesters, excavators, cranes, etc.

Typically, a joystick is located near the front end of an armrest, so that a machine operator can rest their forearm on the armrest and comfortably operate the joystick with their hand. However, some operators are right-handed, and others are left-handed. A designed position of the joystick will not therefore suit all possible users.

There have been proposals for control interfaces (e.g. including one or more joysticks) that can be configured for right-handed or left-handed operation. For example, US9156498 discloses a control panel that is slidable along a horizontal rail between left and right positions. US7681687 discloses a control panel mounted on a parallelogram arm arrangement that can pivot from left to right in a vertical plane.

These known arrangements require significant additional hardware, giving undesirable complexity, cost and weight. There is therefore a need for a simpler solution to enable a control interface to be configured for left-handed and right-handed operation.

### BRIEF SUMMARY

According to an aspect of this disclosure, there is provided a control station for controlling a vehicle. The control station comprises a seat and a control interface. The control interface is mounted on a mounting system having a support arm having a first end and a second end. The control interface is mounted at (or in the vicinity of) the first end. The support arm is slidable along a guide arm between a lowered upright position and a raised upright position. In the lowered upright position, the control interface is positioned nearer to a first side of the seat than a second, opposite, side of the seat. This is for one of left- and right-handed operation. In the raised upright position, the support arm is pivotable about its second end between the upright raised position and a flat position. The support arm then extends across the seat (over the user's lap) with the control interface positioned nearer to the second side of the seat than the first side of the seat for the other of left and right-handed operation.

Thus, the control interface can be moved from one side to the other by lifting and rotating the support arm to which the control interface is mounted. In one position, the support arm is upright with the control interface at the top, and in the other position, the support arm is flat with the control interface at a lateral end (opposite to the end where the support arm is pivotally connected to the guide arm).

It is noted that the upright position is typically vertical (assuming the vehicle having the control station is on horizontal ground) and the flat position is typically horizontal. However, the orientations may be different. Thus, the guide arm is generally upright so that the support arm is lifted from the lowered position into the raised position. The support arm is positioned across the user's lap when in the flat position, but it does not need to be horizontal. It just needs to extend towards the other side of the seat so that the control interface is more convenient for the other hand of the user.

The control interface for example comprises at least one joystick. A joystick in particular is easier to use with the correct hand. The shape or ergonomics of the handle of the joystick may be appropriate for left-hand use as well as for right-hand use.

The control station for example further comprises a first armrest on the first side of the seat and a second armrest on the second side of the seat. In the lowered upright position, the control interface may be positioned in front of the first armrest. Thus, it does not obstruct the user getting in and out of the seat.

In the flat position, the control interface may be positioned between the first and second armrests. It does not need to extend over the seat as far as the opposite armrest (because the user can position their arm in slightly and bend their wrist).

The first side is for example a left side and the second side is a right side. Of course, the sides may be the other way around.

The support arm for example has a base portion that is connected to (or in the vicinity of) the first end by a hinge connection, wherein the control interface is mounted to the base portion, and wherein the guide arm has a first support for holding open the hinge connection when the support arm is in the lowered upright position such that the base portion is oriented flat.

Again, the "flat" orientation may be horizontal when the vehicle is on horizontal ground (i.e. the base portion is parallel to the vehicle ground contact plane). Thus, in this lowered position, the support arm is upright, and the base portion is hinged open to provide a flat (e.g. horizontal) base portion. The base portion rests in this open position, perpendicular to the support arm, on the first support.

The guide arm may also have a second support for supporting the support arm when the support arm is in the flat position. Thus, the guide arm limits how far the support arm pivots open such that it reaches a stop when in the desired flat orientation across the user's lap.

The hinge connection (of the base portion) is closed when the support arm is in the flat position such that the base portion is oriented flat parallel to the remainder of the support arm.

The guide arm for example comprises a channel for receiving the support arm. When the support arm approaches the top of the channel, it is free to pivot across to the flat position.

This disclosure also provides a vehicle having the control station described above. The vehicle may be an agricultural vehicle such as a tractor, a harvester, a combine, a sprayer, etc. that is optionally connected with an agricultural implement such as a seeder, a plough, a mower, a rake, a header, a baler, a trailer, etc.

### BRIEF DESCRIPTION OF THE DRAWINGS

Several aspects of the invention will now be described, by way of example only, with reference to the accompanying drawings, in which:
FIG. 1 shows a tractor having a control station;
FIG. 2 shows a control station configured for left-handed operation;
FIG. 3 shows the control station of FIG. 2 being moved towards a configuration for right-handed operation; and
FIG. 4 shows the control station of FIG. 2 configured for right-handed operation.

### DETAILED DESCRIPTION

It should be understood that the detailed description and specific examples, while indicating exemplary embodiments of the apparatus, systems and methods, are intended for purposes of illustration only and are not intended to limit the scope. These and other features, aspects, and advantages of the apparatus, systems and methods of the present aspects of the invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a control station for controlling a vehicle, comprising a seat and a control interface. The control interface is mounted to a mounting system such that it can be positioned for left-handed or right-handed operation. The control interface is mounted at the end of a support arm. In one configuration, the support arm is upright with the control interface at the top. In the other configuration, the support arm is lifted and rotated so that it lies over the lap of the user, and the control interface is then positioned towards the other side of the user.

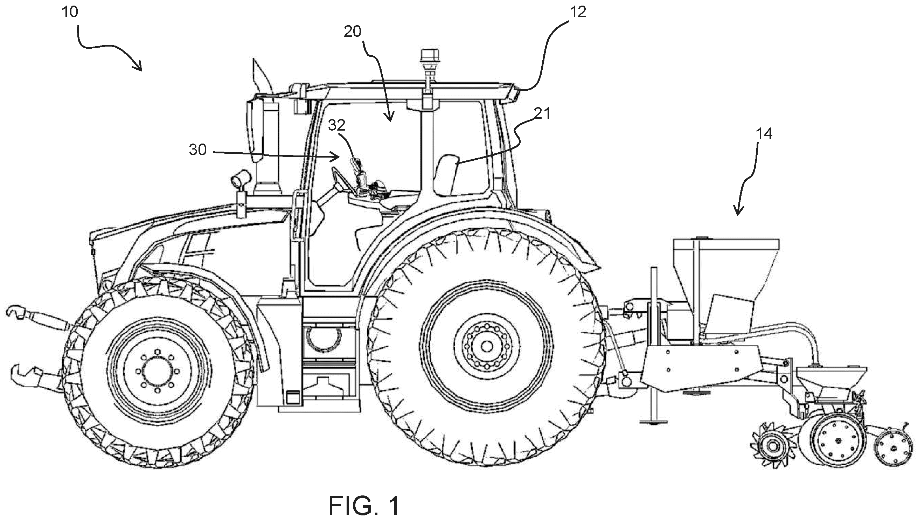

FIG. 1 shows a tractor 10 comprising a cab 12 in which there is a control station 20 comprising a seat 21 and a control interface 30. The control interface 30 comprises a joystick 32 on which there are mounted control buttons. FIG. 1 also shows an implement 14 connected with, and towed by, the tractor, such as a seeder. The tractor 10 in this example has a steering wheel for steering the tractor and the joystick 32 is used to control the implement 14 connected with the tractor 10. In other examples, the joystick may be for steering the vehicle itself. This disclosure is not limited to any particular functionality of the control interface.

The use of a joystick for controlling steering of a vehicle or controlling movement of an implement fitted to the vehicle is well known. Joystick controls are widely used in agricultural machinery, such as the tractor of FIG. 1 but also in combine harvesters, planters, sprayers etc., and also in construction machinery such as cranes, diggers, dumpers etc.

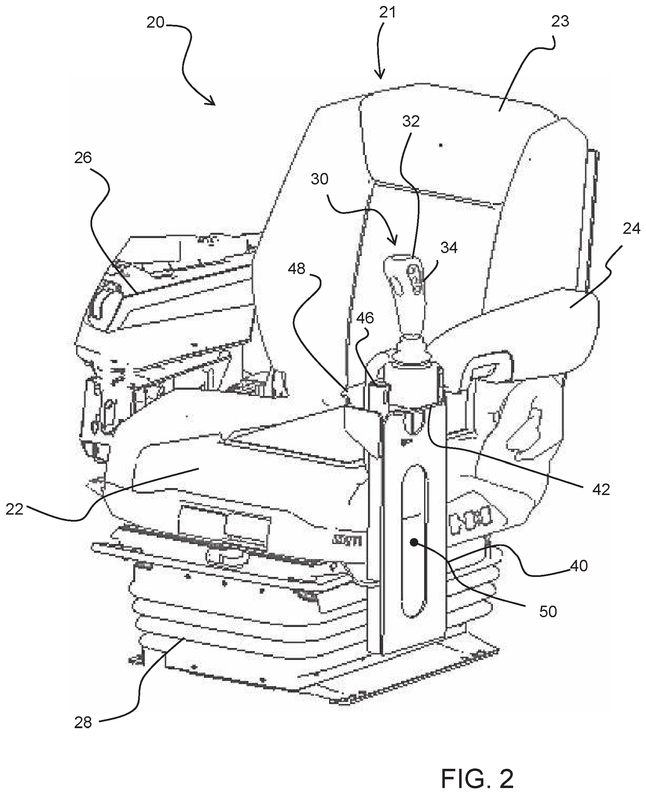

FIG. 2 shows a control station 20 configured for left-handed operation. The control station comprises a seat 21 and the control interface 30. The seat has a seat part 22, a backrest 23, a left armrest 24 and a right armrest 26. The seat 21 is supported by a suspension base 28.

The control interface 30 in this example comprises a joystick 32 on which control buttons 34 are mounted. The control interface 30 may however additionally or alternatively comprise a control panel and it may include a display for providing feedback information. The mounting system of this disclosure may be used to mount any design of control interface (with or without one or more joysticks).

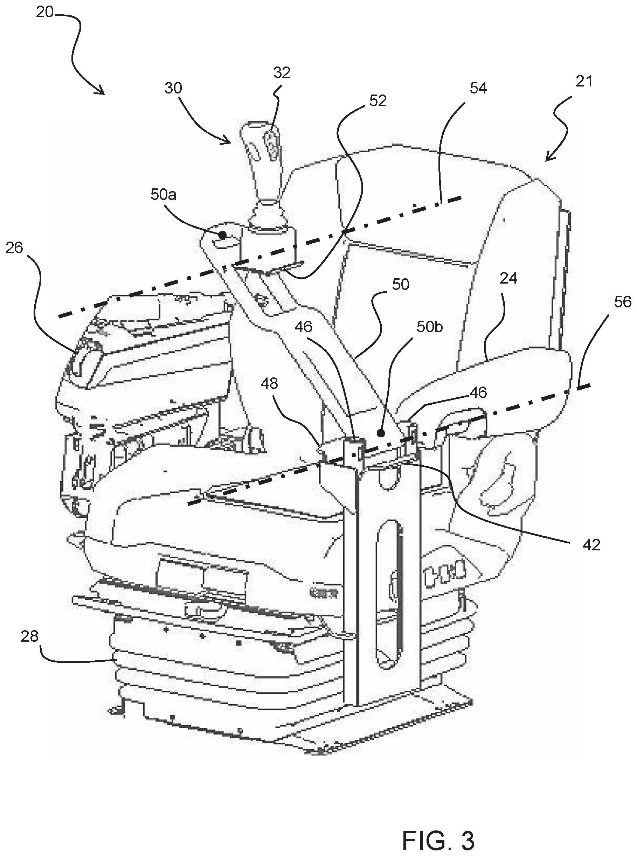

The control interface 30 is mounted to a mounting system. As shown more clearly in FIG. 3, the mounting system has a support arm 50 having a first end 50a and a second end 50b. The control interface 30 is mounted at the first end 50a.

It is noted that the term "end" is not intended to denote only the final extremity of the component in question, but the first and second ends denote generally opposite regions. For example, an end of the support arm may comprise an end third of the length of the support arm.

The support arm 50 has a base portion 52 that is connected at the first end 50a by a hinge connection. The axis of rotation of the hinge connection is shown as 54. The control interface 30 is mounted to the base portion 52. The base portion can hinge between an open position (e.g. in which it provides a support that is perpendicular to the support arm 50) and a closed position in which the base is co-planar with the surrounding area of the support arm 50.

Returning to FIG. 2, the support arm is not clearly visible because it is contained with a guide arm 40. The support arm 50 is slidable along and within the guide arm 40 between a lowered upright position as is shown in FIG. 2 and a raised upright position. In the lowered upright position as shown in FIG. 2, the control interface 30 is positioned nearer to the left side of the seat than the right side of the seat. This is for left-handed operation.

In the lowered upright position shown in FIG. 2, the control interface 30 is in particular positioned in front of the left armrest 24. Thus, the control interface does not obstruct the user getting in and out of the seat 21.

The guide arm 40 has a first support 42 for supporting the hinge connection between the base portion 52 and the support arm 50 in an open position, when the support arm is in the lowered upright position of FIG. 2. As a result, the base portion is oriented flat. The joystick projects upwardly from the base portion 52.

By "flat orientation" is meant horizontal (when the vehicle 10 is on horizontal ground). The base portion 52 rests in this open position on the first support 42.

The guide arm 40 comprises a channel that receives the support arm 50.

FIG. 3 shows the support arm 50 after lifting out of the channel of the guide arm 40 and also after a partial rotation. The guide arm 40 has rails 46 at each side and the support arm 50 has pins (not shown) at the second end 50b that allow the support arm 50 to slide up and down the channel of the guide arm 40 along the rails 46. The support arm 50 is held in the upright position until it reaches near the top of the travel along the rails 46. It can than pivot about the pins, and hence about the second end 50b of the support arm 50. This pivoting is about an axis of rotation shown as 56. Thus, when the support arm 50 reaches or approaches the raised raised upright position, the support arm 50 is pivotable about its second end 50b between the upright raised position and a flat position. FIG. 3 shows the support arm 50 partially pivoted towards the flat position. Further, it can be seen that the axis of rotation 54 and the axis of rotation 56 are parallel to each other. Optionally, the axes of rotation 54 and 56 may have a different orientation to each other.

The guide arm 40 has a second support 48 for supporting the support arm 50 when the support arm 50 is in the flat position. Thus, the guide arm 40, by means of its second support 48, limits how far the support arm pivots open such that it reaches a stop when in the desired flat orientation.

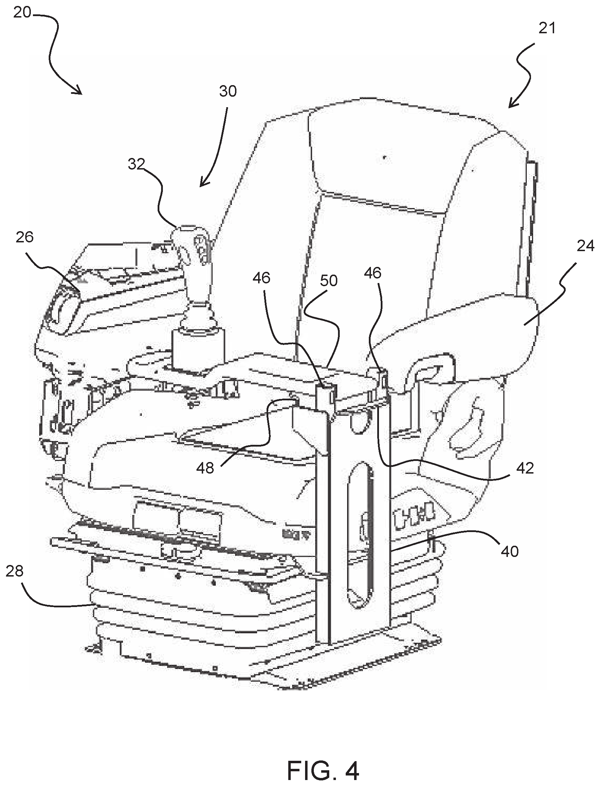

FIG. 4 shows the control station 20 configured for right-handed operation with the support arm 50 in the flat position. The support arm 50 extends across the seat 21 (over the user's lap) with the control interface 30 positioned nearer to the right side of the seat 21 than the left side of the seat 21.

The hinge connection (of the base portion 52) is closed when the support arm 50 is in the flat position such that the base portion is oriented flat.

The control interface does not need to be positioned in front of the right armrest 26, because the user reconfigures the mounting system after sitting in the seat 20. Thus, the control interface 30 may be positioned between the first and second armrests 24 and 26. It does not matter if it is in a position that impedes access to the seat 21. It does not need to extend over as far as the right armrest 26 because the user can position their arm in slightly and bend their wrist.

As can be seen, the control interface 30 can be moved from one side to the other by lifting and rotating the support arm 50 to which the control interface 30 is mounted. In the position of FIG. 2, the support arm 50 is upright with the control interface 30 at the top, and in the position of FIG. 4, the support arm 50 is flat with the control interface 30 at a lateral end.

The guide arm 40 is generally upright so that the support arm 50 is lifted from the lowered position into the raised position. It may be vertical (when the vehicle is on horizontal ground) but this is not essential. The support arm 50 is positioned across the user's lap when in the flat position, but it does not need to be horizontal.

A flexible electrical connection to the control interface may extend along or within the support arm 50 to the static guide arm 40 where static electrical connection can be made to the wiring harness.

The base portion 52 may simply remain in the selected position by the action of gravity. However, there may also be a locking mechanism to lock the base portion 52, and hence the control interface 30, in the selected position. Similarly, the support arm 50 may simply remain in the flat position by the action of gravity, but again there may be a locking mechanism to lock the support arm 50 in the flat position.

Variations to the disclosed embodiments can be understood and effected by those skilled in the art in practicing the disclosed embodiments, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A control station (20) for a vehicle, comprising:
a seat (21);
a control interface (30); and
a mounting system (40,50) on which the control interface is mounted, wherein the mounting system comprises:
a support arm (50) having a first end (50a) and a second end (50b), wherein the control interface (30) is mounted at the first end (50a);
a guide arm (40), wherein the support arm (50) is slidable along the guide arm (40) between a lowered upright position and a raised upright position, wherein in the lowered upright position the control interface (30) is positioned nearer to a first side of the seat (21) than a second, opposite, side of the seat (21), and wherein in the raised upright position the support arm (50) is pivotable about its second end (50b) between the upright raised position and a flat position, wherein in the flat position the support arm (50) extends across the seat (21) with the control interface (30) positioned nearer to the second side of the seat than the first side of the seat.

2. The control station of claim 1, wherein the control interface (30) comprises at least one joystick (32).

3. The control station of claim 1 or 2, further comprising a first armrest (24) on the first side of the seat and a second armrest (26) on the second side of the seat.

4. The control station of any one of claims 1 to 3, wherein in the lowered upright position the control interface (30) is positioned in front of the first armrest (24).

5. The control station of any one of claims 1 to 4, wherein in the flat position the control interface (30) is positioned between the first and second armrests (24,26).

6. The control station of any one of claims 1 to 5, wherein the first side is a left side and the second side is a right side.

7. The control station of any one of claims 1 to 6, wherein the support arm (50) has a base portion (52) that is connected to the first end (50a) by a hinge connection, wherein the control interface (30) is mounted to the base portion (52), and wherein the guide (40) arm has a first support (42) for holding open the hinge connection when the support arm is in the lowered upright position such that the base portion is oriented flat.

8. The control station of claim 7, wherein the guide arm has a second support (48) for supporting the support arm (50) when the support arm (50) is in the flat position.

9. The control station of claim 8, wherein the hinge connection is closed when the support arm (50) is in the flat position such that the base portion (52) is oriented flat.

10. The control station of any one of claims 1 to 9, wherein the guide arm (40) comprises a channel for receiving the support arm (50).

11. The control station of any one of claims 1 to 10, wherein the guide arm (40) is vertical.

12. A vehicle comprising the control station of any one of claims 1 to 11.
